# FASCICULE DE BREVET EUROPEEN

(11) **EP 2 591 273 B1**
(45) Date de publication et mention de la délivrance du brevet: **29.10.2014**
(21) Numéro de dépôt: 11704472.7
(22) Date de dépôt: 04.01.2011
(51) Int. Cl.: F17C 13/04

(54) **RACCORD DE REMPLISSAGE, RÉCIPIENT ET PROCÉDÉ DE REMPLISSAGE CORRESPONDANTS**
BEFÜLLUNGSANSCHLUSS, ENTSPRECHENDER BEHÄLTER UND ENTSPRECHENDES BEFÜLLUNGSVERFAHREN
FILLING CONNECTOR, CORRESPONDING CONTAINER AND CORRESPONDING FILLING METHOD

(30) Priorité: 09.07.2010 FR 1055605
(43) Date de publication de la demande: 15.05.2013
(73) Titulaire: L'Air Liquide Société Anonyme pour l'Etude et l'Exploitation des Procédés Georges Claude, 75007 Paris (FR)
(72) Inventeur: FRENAL, Antoine, F-95460 Ezanville (FR); MANSCOURT, Cyril, 92170 Vanves (FR); PISOT, Philippe, 38140 Apprieu (FR)
(74) Mandataire: De Cuenca, Emmanuel Jaime
(86) Numéro de dépôt international: PCT/FR2011/050006
(87) Numéro de publication internationale: WO 2012/004481

(56) Documents cités:
- DE-A1- 3 241 843
- DE-A1- 3 912 623
- DE-U1- 8 813 050
- FR-A- 1 387 267
- FR-A2- 2 311 989
- GB-A- 1 152 890
- GB-A- 2 319 587

## Description

La présente invention concerne un raccord de remplissage, un robinet, un récipient de fluide sous pression et un procédé de remplissage utilisant un tel raccord.

L'invention concerne plus particulièrement un raccord de remplissage pour récipient de gaz sous pression destiné à coopérer avec une prise de conditionnement pour permettre le remplissage dudit récipient, le raccord comprenant un corps définissant un circuit interne de remplissage entre une extrémité amont destinée à être reliée à une prise de conditionnement et une extrémité aval destinée à être reliée à un récipient, le raccord comprenant un clapet d'isolement mobile relativement à un siège entre une position amont de fermeture du circuit et une position aval d'ouverture du circuit, ledit clapet d'isolement étant sollicité vers sa position amont par un organe de rappel, le raccord comprenant en outre un clapet pare-poussière disposé en amont du clapet d'isolement, ledit clapet pare-poussière comportant une extrémité aval et étant mobile relativement au corps entre une position amont de fermeture de l'extrémité amont du circuit et une position aval d'ouverture de l'extrémité amont circuit, ledit clapet pare-poussière étant sollicité vers sa position amont par un organe de rappel.

La présente concerne en particulier un raccord de remplissage comprenant en série, d'amont en aval, un clapet pare-poussière et un clapet d'isolement (les termes « amont » et « aval » se réfèrent au sens de circulation du gaz lors d'un remplissage). Un tel raccord est connu de FR 2311989 A2, considéré comme art antérieur le plus proche.

Le clapet pare-poussière est prévu notamment pour former une barrière en amont du clapet d'isolation pour empêcher ou limiter l'intrusion de particules ou de poussières pouvant altérer l'étanchéité dudit clapet d'isolement.

Généralement les raccords de remplissage comportent un bouchon pare-poussière qui s'escamote au contact de l'extrémité de la prise de conditionnement pour permettre à la prise de remplissage de s'enfoncer dans le raccord de remplissage pour actionner le clapet d'isolation situé en aval dans le raccord de remplissage. Ceci constitue généralement une bonne protection contre l'intrusion de corps étrangers dans un raccord de remplissage. Cependant, cette protection n'est généralement pas suffisante car, lorsque le clapet pare-poussière est ouvert, la prise de remplissage qui pénètre dans le raccord de remplissage en aval du clapet pare-poussière peut apporter des particules.

Une pollution du clapet d'isolation peut engendrer un taux de fuite important au cours de la durée de vie du produit sur lequel est monté ce raccord de remplissage. Ceci s'explique par le fait que la zone d'étanchéité du clapet d'isolation polluée (poussière, particules,...) perd une grande partie de son étanchéité. Ce risque d'intrusion de particules est accru lorsque le raccord de remplissage est vertical (remplissage par le haut).

Une solution connue consiste à prévoir un filtre pour particules solides dans le raccord, en amont du clapet d'isolation. Ceci permet de retenir des particules ou poussières en amont du clapet d'isolation mais ne permet pas d'actionner l'ouverture du clapet d'isolation par contact mécanique (le filtre formant en effet une barrière mécanique pour un pousse-clapet).

Une autre solution consiste à prévoir un filtre en aval du clapet d'isolation. Ceci permet l'actionnement mécanique du clapet d'isolation et protège des poussières l'aval du clapet d'isolation (l'intérieur du robinet et l'intérieur du récipient). Cependant, l'extrémité amont du clapet d'isolation est alors sujette aux pollutions par des particules ou poussières pouvant affecter son étanchéité.

Le document WO2009101350 décrit un dispositif de remplissage et de distribution de gaz d'un réservoir de gaz sous pression comprenant un conduit de soutirage comprenant un détendeur et deux clapets disposés en série et actionnables par un système utilisateur pour le soutirage de gaz. Pour remplir le réservoir, une dérivation est réalisée sur une partie du conduit de soutirage formant un canal de remplissage court-circuitant l'un des deux clapets et le détendeur du conduit de soutirage.

Un but de la présente invention est de pallier tout ou partie des inconvénients de l'art antérieur relevés ci-dessus.

A cette fin, le raccord selon l'invention, par ailleurs conforme à la définition générique qu'en donne le préambule ci-dessus, est essentiellement caractérisé en ce que le clapet pare-poussière est déplaçable sélectivement vers l'aval soit :
- dans une première position aval déterminée dite « sans contact » ouvrant l'extrémité amont du circuit, dans laquelle l'extrémité aval du clapet pare-poussière ne pousse pas l'extrémité amont du clapet d'isolement, l'extrémité amont du clapet d'isolement étant susceptible d'être poussée vers sa position aval d'ouverture du circuit par du fluide sous pression entrant par l'extrémité amont ouverte du circuit, soit dans,
- une seconde position aval déterminée dite « de contact » ouvrant l'extrémité amont du circuit, dans laquelle l'extrémité aval du clapet pare-poussière vient pousser une extrémité amont du clapet d'isolement mobile pour déplacer par contact le clapet d'isolement vers sa position aval d'ouverture du circuit et en ce que le clapet pare-poussière comporte un ou des passages pour guider au moins une partie du flux de fluide transitant d'amont en aval à travers le corps dudit clapet pare-poussière.

Ainsi, selon l'invention, le clapet pare-poussière mobile coulisse dans le circuit interne du raccord de remplissage et forme un écran entre l'outil de remplissage (prise de remplissage) et le clapet d'isolement.

Un tel agencement permet également d'améliorer la fiabilité et la sécurité du système de remplissage. En effet, le clapet pare-poussière guide et force le flux de gaz entrant lors du remplissage lors de son transit vers l'aval. Les conduits de passage traversant le clapet pare-poussière peuvent permettre notamment de diminuer les turbulences du gaz lors du remplissage. De cette façon, les vibrations générées sont également réduites. La convergence du ou des flux traversant le clapet pare-poussière permet notamment d'accélérer le flux de gaz et de le concentrer vers une zone centrale du passage, notamment au niveau de l'ouverture du siège (partie amont du clapet d'isolation aval). Cette configuration permet d'épargner au moins en partie le ressort du clapet du flux de gaz de remplissage. Ce guidage du gaz de remplissage peut permettre également de diriger le flux de gaz vers la zone formant le siège pour le clapet d'isolation aval, favorisant son nettoyage à chaque remplissage. Ceci permet de réduire les risques de fuites dues à un siège de clapet d'isolation souillé.

La configuration permet ainsi d'améliorer significativement la sécurité de la bouteille lors de ses remplissages multiples.

Cette architecture permet également de protéger le clapet d'isolement lors des opérations de remplissage successives.

De cette façon, en position fermée le clapet pare-poussière amont protège le clapet d'isolement aval des poussières, mais protège également le clapet d'isolement aval du contact direct avec l'extrémité d'une prise de remplissage.

De plus, cette architecture à double clapets mobiles en série coulissant selon un même axe forme un mécanisme de protection efficace dans un processus de remplissage permettant une protection améliorée du clapet d'isolation aval.

L'agencement des deux clapets en série permet de coopèrer efficacement avec une prise de conditionnement déterminée.

En particulier, le clapet pare-poussière coulissant peut permettre l'ouverture de l'amont du raccord tout
- en protégeant des particules le clapet d'isolation aval et
- en permettant l'actionnement ce clapet d'isolation aval par contact mécanique.

L'agencement du clapet pare-poussière amont et du clapet d'isolation aval coopère également aisément avec des prises de conditionnement assurant l'ouverture du clapet d'isolation aval via un flux de gaz sous pression délivré dans le raccord (au lieu d'un contact mécanique).

Selon l'invention, le clapet pare-poussière régule le flux de gaz entrant lors d'un remplissage car le gaz est forcé à traverser le corps du clapet pare-poussière. Ceci régule avantageusement le flux de gaz vers la partie aval en minimisant les turbulences néfastes pour la mécanique du clapet d'isolation.

L'agencement du raccord à double clapets en série garantit ainsi une protection élevée du clapet d'isolation contre des salissures et offre des séquences d'ouvertures qui s'adaptent à différents types de remplissages.

L'invention offre une grande sécurité dans les séquences d'ouverture/fermeture du raccord de remplissage. De plus, le remplissage selon l'invention préserve l'étanchéité du raccord durant la durée de vie du raccord.

Ainsi, par exemple, et sans que ce soit limitatif, le clapet amont pare-poussière peut avantageusement participer à l'ouverture mécanique du clapet d'isolation aval en transmettant un effort d'ouverture d'amont en aval. C'est-à-dire que, dans certaines configurations de remplissage, le clapet pare-poussière peut former un organe de transmission de mouvement entre une prise de conditionnement et le clapet d'isolation aval.

De même, le clapet pare-poussière mobile peut assurer une ouverture de l'amont du raccord permettant l'ouverture du clapet d'isolation aval avec la pression du gaz de remplissage (en fonction des pressions et tarage des clapets).

Le clapet amont pare-poussière peut ainsi assurer les fonctions suivantes :
- l'ouverture/fermeture de l'amont du circuit,
- guidage du flux de fluide en amont du clapet d'isolation lors d'un processus de remplissage, et, éventuellement,
- la transmission de mouvement mécanique pour commander sélectivement l'ouverture ou la fermeture du clapet aval d'isolation.

Selon des particularités possibles :
- le corps du clapet pare-poussière coulisse dans le circuit, le ou les passages contraignant la totalité ou la quasi-totalité du flux de fluide transitant d'amont en aval dans le circuit à passer à travers le corps dudit clapet pare-poussière, quelle que soit la position aval du clapet pare-poussière,
- le ou les passages comportent au moins une portion convergente pour guider au moins une partie du gaz transitant à travers le clapet pare-poussière vers la partie centrale du circuit interne de remplissage,
- le ou les passages convergent et guident au moins une partie du gaz transitant à travers le clapet pare-poussière de façon parallèle dans la partie centrale du circuit interne de remplissage,
- le ou les passages convergent pour guider au moins une partie du gaz transitant à travers le clapet pare-poussière vers la partie centrale de l'extrémité amont du clapet d'isolement,
- le ou les passages convergent pour guider au moins une partie du gaz transitant à travers le clapet pare-poussière vers une zone convergente du circuit interne de remplissage définissant le siège du clapet d'isolement,
- le clapet d'isolement est déplaçable sélectivement dans une position aval d'ouverture du circuit par actionnement mécanique réalisé par le clapet pare-poussière,
- le clapet d'isolement est déplaçable sélectivement dans une position aval d'ouverture du circuit par un flux de fluide sous pression,
- le clapet pare-poussière est sélectivement déplaçable vers l'aval par un actionnement mécanique et/ou par du fluide sous pression,
- la surface extérieure et/ou interne du corps du raccord comprend des empreintes formant des creux et/ou des reliefs d'attache destinés à coopérer avec des formes conjuguées d'une prise de conditionnement pour former un système d'attache mécanique sélectif, notamment à connexion rapide,
- le clapet pare-poussière comporte une extrémité amont actionnable mécaniquement et/ou via du fluide sous pression,
- le clapet d'isolement mobile comporte une garniture d'étanchéité souple destiné à coopérer avec le siège pour réaliser la fermeture étanche du circuit lorsque le clapet est sollicité contre le siège avec une pression déterminée,
- en position amont de fermeture de l'extrémité amont du circuit, ledit clapet pare-poussière obture de façon étanche l'orifice d'entrée de l'extrémité amont circuit, par exemple de façon étanche à l'eau,
- en position amont de fermeture de l'extrémité amont du circuit, ledit clapet pare-poussière obture de façon non-étanche l'orifice d'entrée de l'extrémité amont circuit,
- le corps du raccord et/ou le clapet pare-poussière comporte une lèvre souple formant une barrière d'étanchéité à l'eau entre le corps du raccord et le clapet pare-poussière au moins lorsque ce dernier est en position amont de fermeture,
- la lèvre souple comporte une extrémité libre autorisant le passage de gaz ou de liquide lorsqu'un différentiel de pression déterminé existe de part et d'autre de la lèvre, pour permettre notamment une éventuelle évacuation de gaz de l'aval vers l'amont, par exemple en cas de fuite du clapet d'isolement,
- en position amont du clapet pare-poussière, l'extrémité amont du clapet pare-poussière referme l'extrémité amont du circuit de façon affleurante à l'extrémité amont du corps du raccord,
- le corps du clapet pare-poussière coulisse de façon étanche dans le circuit,
- l'étanchéité entre le clapet pare-poussière et le corps du raccord est réalisée par contact métal/métal et/ou via au moins un joint,
- le ou les passages comprennent un ou des conduits internes traversant le corps du clapet pare-poussière et/ou traversant le corps du raccord,
- le ou les passages comprennent au moins un espacement entre le clapet pare-poussière et le corps du raccord, pour contraindre la totalité ou la quasi-totalité du flux de fluide transitant d'amont en aval dans le circuit à passer à travers le clapet pare-poussière,
- l'organe de rappel sollicitant le clapet d'isolement vers sa position amont comprend au moins l'un parmi : un ressort de compression un ressort de traction,
- l'organe de rappel sollicitant le clapet pare-poussière vers sa position amont comprend au moins l'un parmi : un ressort de compression,
- l'extrémité aval du clapet pare-poussière comprend une tige pour actionner mécaniquement l'extrémité amont du clapet d'isolement,
- l'extrémité amont du clapet d'isolement comprend une surface destinée à coopérer en contact mécanique avec l'extrémité aval du clapet pare-poussière,
- la fermeture du clapet d'isolement est réalisée avant la fermeture du clapet pare-poussière,
- le siège du clapet d'isolement est formé par un épaulement d'un cadre tubulaire solidaire du corps du raccord, le clapet d'isolement coulissant dans ce cadre, l'extrémité aval du clapet pare-poussière entrant dans ledit cadre lorsque le clapet pare-poussière vient en position aval,
- le raccord comporte une butée destinée à coopérer avec le clapet pare-poussière pour limiter la position aval maximale de ce dernier,
- la butée destinée à coopérer avec le clapet pare-poussière pour limiter la position aval maximale de ce dernier est solidaire du corps du raccord et/ou d'un cadre solidaire du corps et définissant le siège du clapet d'isolement,
- le clapet d'isolement comprend un mécanisme anti-retour générant un effort sur le clapet d'isolement le sollicitant vers l'amont lorsque ce dernier est soumis à une pression fluidique dans sa partie amont,
- le mécanisme anti-retour comprend un canal reliant l'extrémité amont du clapet d'isolement à une chambre aval, pour transformer une pression fluidique sur la partie amont du clapet en un effort sur l'extrémité aval du clapet d'isolement tendant à déplacer ledit clapet d'isolement en position amont de fermeture,
- le mécanisme anti-retour (« NRV ») comporte un rapport de surfaces déterminé entre d'une part l'extrémité amont du clapet d'isolement soumise à un fluide amont et, d'autre part, l'extrémité aval du clapet d'isolement communiquant avec la chambre, pour solliciter ledit clapet d'isolement en position amont de fermeture lorsque son extrémité amont est soumise à du fluide sous pression.

L'invention concerne également un robinet pour fluide sous pression, en particulier pour gaz sous pression, avec ou sans détendeur de pression, comprenant un raccord de remplissage destiné à coopérer avec une prise de conditionnement pour permettre le remplissage dudit récipient via ledit raccord, le raccord de remplissage étant conforme à l'une quelconque des caractéristiques ci-dessus ou ci-après.

L'invention concerne également un récipient de fluide sous pression, en particulier bouteille de gaz sous pression, comprenant un robinet conforme à l'une quelconque des caractéristiques ci-dessus ou ci-après.

L'invention concerne également un procédé de remplissage d'un tel récipient de gaz sous pression au moyen d'une prise de conditionnement connectée mécaniquement audit raccord de remplissage du récipient de façon amovible, le procédé comportant une première étape de déplacement du clapet pare-poussière vers l'aval pour ouvrir l'extrémité amont du circuit via un actionnement mécanique et/ou un actionnement fluidique réalisé par la prise de conditionnement et une seconde étape de déplacement du clapet d'isolement vers une position aval d'ouverture via un actionnement mécanique réalisé par le clapet pare-poussière et/ou via un actionnement fluidique réalisé par le gaz délivré par la prise de conditionnement.

Selon d'autres particularités possibles,
- lors de la première étape le clapet pare-poussière est déplacé dans sa première position aval déterminée dite « sans contact », dans la seconde étape le clapet d'isolement étant déplacé vers une position aval d'ouverture via un actionnement fluidique réalisé par le gaz délivré par la prise de conditionnement,
- lors de la première étape, le clapet pare-poussière est déplacé dans sa seconde position aval déterminée dite « de contact », dans la seconde étape le clapet d'isolement étant déplacé vers une position aval d'ouverture via un actionnement mécanique réalisé par le clapet pare-poussière,
- le clapet pare-poussière est déplacé vers l'aval par une action mécanique d'une extrémité d'un pousse-clapet appartenant à la prise de conditionnement,
- en fin de processus de remplissage d'un récipient de gaz sous pression, le clapet d'isolement est refermé automatiquement lorsque l'effort mécanique et/ou fluidique exercé sur la partie amont le clapet devient inférieur à un seuil déterminé,
- le procédé de remplissage comporte une première étape de déplacement du clapet pare-poussière vers une position aval d'ouverture de l'extrémité amont du circuit via un actionnement mécanique et/ou un actionnement fluidique réalisé par la prise de conditionnement et une seconde étape de déplacement du clapet d'isolement vers une position aval d'ouverture via un actionnement mécanique réalisé par le clapet pare-poussière,
- l'ouverture du ou des clapets peut être réalisée indépendamment de l'attache mécanique de la prise de conditionnement sur le raccord, en particulier, l'ouverture du ou des clapets peut être réalisée par la prise de conditionnement après l'attache mécanique de la prise de conditionnement sur le raccord et via un actionnement distinct du système d'attache,
- la prise de conditionnement prévue pour coopérer avec un raccord de remplissage d'un robinet de récipient de fluide sous pression comprend au moins une griffe s'étendant selon une direction longitudinale autour d'un axe longitudinal, l'espace central situé entre la ou les griffes et l'axe longitudinal formant un logement destiné à accueillir un raccord de remplissage de forme générale cylindrique, la face interne de la au moins une griffe située en vis-à-vis de l'espace central comprenant des reliefs et/ou des creux de dimensions déterminées, les reliefs et/ou creux étant espacés relativement les uns des autres de façon déterminée pour s'emboîter dans des rainures et/ou reliefs conjugués formés sur la face extérieure d'un raccord de remplissage, la au moins une griffe étant mobile transversalement par rapport à l'axe longitudinal entre une position dite « écartée » pour permettre l'introduction d'un raccord dans l'espace central et une position dite « rapprochée » pour permettre l'emboîtement de la face interne des griffes sur la face extérieure d'un raccord, ladite prise comprenant un organe de verrouillage mobile entre une position active bloquant les griffes en position rapprochée et une position inactive autorisant le déplacement des griffes vers la position écartée.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe schématique illustrant un premier exemple de réalisation d'un raccord de remplissage selon l'invention dans une position fermée,
- la figure 2 représente une vue en coupe, schématique et partielle illustrant le raccord de remplissage de la figure 1 monté sur un robinet de récipient, dans une position ouverte par l'action d'une prise de conditionnement,
- la figure 3 représente une vue en coupe, schématique et partielle, illustrant la structure d'un raccord de remplissage selon l'invention dans une position fermée (deux clapets fermés),
- la figure 4 représente le raccord de remplissage de la figure 3 dans une position ouverte (deux clapets ouverts par contact mécanique)
- la figure 5 représente le raccord de remplissage de la figure 3 dans une position ouverte (deux clapets ouverts respectivement par pression de gaz et par contact mécanique),
- la figure 6 représente le raccord de remplissage de la figure 3 dans une position ouverte (deux clapets ouverts respectivement par contact mécanique et par pression de gaz),
- la figure 7 représente le raccord de remplissage de la figure 3 dans une position ouverte (deux clapets ouverts par pression de gaz),
- la figure 8 représente une vue en coupe agrandie d'un détail de l'extrémité amont d'un raccord de remplissage illustrant un autre exemple de réalisation possible du clapet amont en position fermée),
- la figure 9 représente le raccord de remplissage de la figure 3 dans une position fermée de test (clapet amont ouvert et clapet aval fermé).

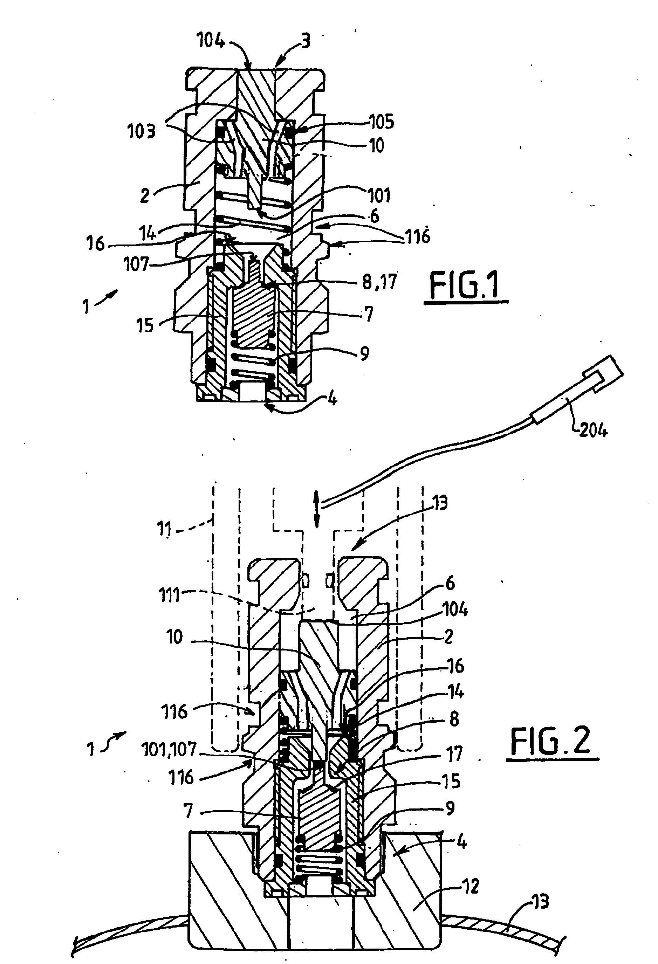

En se référant à présent à la figure 1, le raccord 1 de remplissage comprend un corps 2, par exemple de forme générale cylindrique. Le corps 2 définit un circuit 6 interne de remplissage entre une extrémité amont 3 destinée à être reliée à une prise de conditionnement et une extrémité aval 4 destinée à être reliée avec un récipient de gaz sous pression (via par exemple un circuit interne d'un robinet).

L'extrémité amont 3 du circuit 6 (et du raccord 1) est sélectivement refermable par un clapet 10 pare-poussière mobile dans le corps 2 du raccord.

Le clapet 10 pare-poussière est sélectivement mobile dans le corps 2 (de préférence en translation) entre une position amont de fermeture de l'extrémité amont 3 du circuit 6 et une position aval d'ouverture de l'extrémité amont 3 circuit. De préférence, le clapet 10 pare-poussière est sollicité vers sa position amont par un organe 14 de rappel, par exemple un ressort tel qu'un ressort de compression.

De préférence, en position amont de fermeture de l'extrémité amont 3 du circuit 6, le clapet 10 pare-poussière est logé dans le corps 2 du raccord et affleure sur la surface extrême du corps 2 du raccord 1.

Le clapet 10 pare-poussière ferme l'entrée amont 3 du circuit de façon étanche ou non étanche par contact avec le corps 2 du raccord 1. Le corps du clapet pare-poussière 10 peut comporter un ou plusieurs joints 105 obturant de façon étanche le circuit 6.

Le clapet 10 pare-poussière peut comporter un ou des passages 103 guidant au moins une partie et de préférence tout le flux de fluide transitant d'amont 3 en aval 4 à travers le corps du clapet 10 pare-poussières. C'est-à-dire que, lorsqu'un gaz transite d'amont 3 en aval 4, le ou les passages 103 contraignent la totalité ou la quasi-totalité du flux de gaz à passer à travers le corps du clapet 10 pare-poussières quelle que soit la position aval du clapet 10 pare-poussière. Les passages 103 peuvent comprendre des conduits internes traversant le corps du clapet 10. En variante ou en combinaison, il est possible d'envisager des conduits ou passages traversant le corps 2 du raccord 1. De même, en variante ou en combinaison, il est possible d'envisager un ou des passages 103 formés par un espacement entre le clapet 10 pare-poussière et le corps 2 du raccord. En variante ou en combinaison lorsque le clapet 10 poussière ouvre l'extrémité amont 3 du circuit 6, le gaz sous pression transite vers l'aval en contournant le clapet 10 pare-poussière (c'est-à-dire que le gaz passe entre le clapet 10 pare poussière et le corps 2 du raccord).

En aval du clapet 10 pare-poussière, le circuit 6 contient un clapet 7 d'isolement mobile relativement à un siège 8. Le clapet 7 d'isolement est mobile de préférence en translation entre une position amont de fermeture du circuit et une position aval d'ouverture du circuit. Le clapet 7 d'isolement est sollicité par défaut vers sa position amont par un organe 9 de rappel tel qu'un ressort notamment un ressort de compression.

Comme représenté, le clapet 7 d'isolement peut comporter une garniture 17 d'étanchéité souple destiné à coopérer avec le siège 8. La garniture souple peut comprendre du plastique, un polymère, un élastomère vulcanisée ou tout autre matériau approprié.

Comme représenté, sans que ce soit nécessaire, le siège 8 du clapet 7 d'isolement peut être formé par un épaulement annulaire solidaire d'un cadre 15 tubulaire fixé dans le corps 2 du raccord (par exemple par vissage étanche).

Par exemple, le clapet 7 d'isolement coulisse dans ce cadre 15. Une extrémité 16 de ce cadre 15 ou du siège 8 peut par exemple former une butée 16 destinée à coopérer avec le clapet 10 pare-poussière pour limiter la position aval maximale de ce dernier. De même, le ressort 14 du clapet pare-poussière peut prendre appui sur ce cadre 15.

Ainsi, le clapet 10 pare-poussière comporte une extrémité ou surface amont 104 actionnable mécaniquement (c'est-à-dire par contact mécanique) et/ou via du fluide sous pression.

A la figure 2, le raccord 1 est représenté schématiquement sur un robinet 12 d'un récipient 13. De plus, une prise de conditionnement 11 ouvrant le raccord 1 est représentée symboliquement en pointillés.

De préférence, la surface extérieure du corps 2 du raccord 1 comprend des empreintes 116 formant des creux et/ou des reliefs d'attache destinés à coopérer avec des formes conjuguées d'une prise 11 de conditionnement pour former un système d'attache mécanique, notamment à connexion rapide (non représenté en détail). En particulier, de préférence, les empreintes 116 sont dimensionnées et positionnées selon une géométrie déterminée, pour de préférence s'adapter à une prise de conditionnement 11 conjuguée déterminée (et uniquement à celle-ci).

Comme représenté à la figure 2, le clapet 10 pare-poussière est sélectivement déplaçable vers l'aval par un actionnement mécanique, par exemple par un pousse-clapet 111 sélectivement mobile en réponse à un actuateur tel qu'un levier 204 pivotant par exemple. Le déplacement du pousse-clapet 111 peut être obtenu également de façon automatique, par exemple par voie pneumatique ou et/ou va un système électromécanique.

Le pousse-clapet 111 vient de préférence s'introduire dans le raccord de façon étanche et délivre du gaz sous pression via un canal interne ou externe au pousse-clapet 111 (non représenté).

Comme visible à la figure 2, lorsque le clapet 10 pare-poussière est amené dans une position aval déterminée dite « de contact » (avec l'extrémité amont 3 ouverte), une extrémité 101 aval du clapet 10 pare-poussière vient pousser une extrémité amont 107 du clapet 7 d'isolement pour déplacer le clapet 7 d'isolement vers sa position aval d'ouverture du circuit 6.

C'est-à-dire que le clapet 7 d'isolement est déplaçable sélectivement dans une position aval d'ouverture du circuit par actionnement mécanique réalisé par le clapet 10 pare-poussière.

A cet effet, comme représenté aux figures, le clapet 10 pare-poussière peut comporter une extrémité 101 aval en forme de tige dont la surface terminale est prévue pour actionner mécaniquement l'extrémité amont du clapet 7 d'isolement. L'extrémité amont du clapet 7 d'isolement peut également être formée par une tige qui vient faire saillie vers l'amont par rapport au siège 8 de forme générale annulaire.

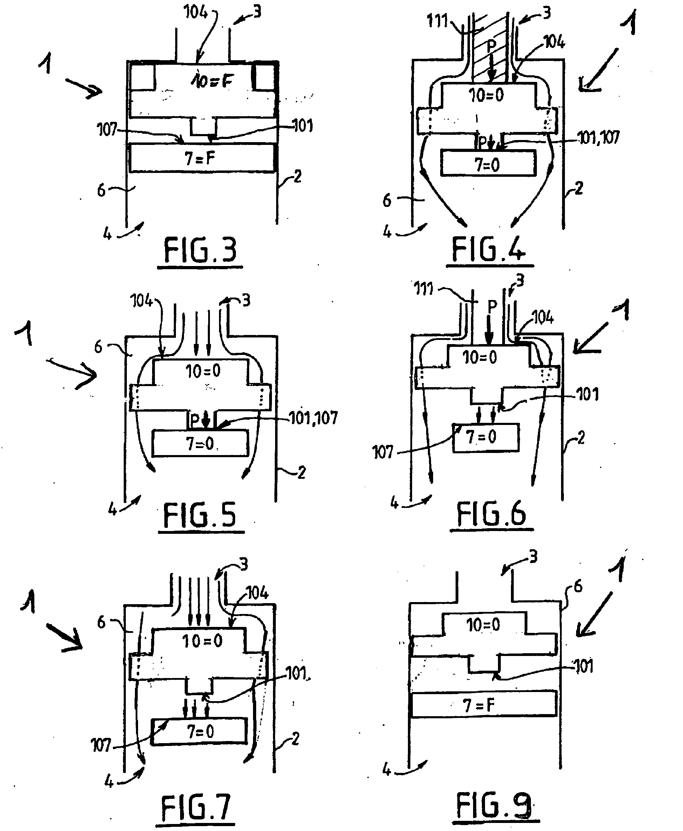

Ainsi, à partir d'une position fermée (clapet 10 pare-poussière fermé F et clapet d'isolement fermé F) illustrée schématiquement à la figure 3, une prise 11 de conditionnement peut pousser mécaniquement l'extrémité amont 104 du clapet 10 pare-poussière (pression P). Le clapet 10 pare-poussière est déplacés vers l'aval. L'entrée du circuit 6 du raccord 2 est ouverte (figure 4). L'extrémité aval 101 du clapet 10 pare-poussière vient à son tour pousser l'extrémité amont 107 du clapet 7 d'isolation (pression mécanique P) qui ouvre alors l'extrémité aval du circuit 6. Le flux de gaz sous pression peut transiter d'amont en aval (symbolisé par les flèches).

Bien entendu, ce mode d'ouverture et de remplissage n'est pas limité à cet exemple. Ainsi, comme représenté à la figure 5, selon les conditions de remplissage, l'extrémité amont 104 du clapet pare-poussière 10 peut être poussée vers l'aval par le flux de gaz lui-même (symbolisé par des flèches). L'extrémité aval 101 du clapet 10 pare-poussière peut ensuite pousser mécaniquement (pression P) le clapet 7 d'isolement.

Dans la variante de la figure 6, le clapet pare-poussière 10 est ouvert (O) mécaniquement par une prise de conditionnement 11 (pression P) mais le clapet 7 d'isolement est ouvert (O) non pas par l'extrémité aval 101 du clapet 10 pare-poussière mais par l'effort exercé par la pression du gaz entrant.

Dans la variante de la figure 7, le clapet pare-poussière 10 et le clapet 7 d'isolement sont ouverts (O) par l'effort exercé par la pression du gaz de remplissage.

Ainsi, on comprend aisément que, selon la géométrie de la prise de remplissage et les conditions de remplissage (notamment le débit et la pression du gaz de remplissage introduit dans le raccord par la prise de remplissage 11), les deux clapets 10, 7 en série peuvent être ouverts (déplacés vers l'aval) par un contact mécanique et/ou par la pression du gaz de remplissage.

Ceci confère une grande souplesse d'utilisation au raccord selon l'invention. En effet, le remplissage de gaz assure dans tous les cas une protection du clapet 7 d'isolation.

En outre, l'ouverture du raccord lors d'un remplissage peut être obtenue par une ouverture séquentielle des deux clapets 10, 7 en série (d'abord le clapet 10 pare-poussière puis le clapet 7 d'isolation).

En fin de processus de remplissage d'un récipient de gaz sous pression, le clapet 7 d'isolement est refermé automatiquement par l'action du ressort 9 lorsque l'effort mécanique et/ou fluidique exercé sur la partie amont le clapet 7 devient inférieur à un seuil déterminé. Lors de la fin de l'opération de remplissage le clapet 7 d'isolement vient se refermer en principe avant que ne se referme le clapet 10 pare-poussière.

La structure selon l'invention permet en outre de mettre en place des procédures de remplissage particulièrement efficaces en terme de sécurité pour les opérateurs assurant le remplissage et pour les utilisateurs finaux du robinet équipé d'un tel raccord.

Ainsi, par exemple, le clapet 10 pare-poussière mobile adopte, au cours de son déplacement, aux moins deux positions d'étanchéité permettant de sécuriser le remplissage.

Dans une première position d'étanchéité, le clapet 10 pare-poussière est déplacé vers l'aval et ouvre l'amont du circuit 6 sans que le clapet 7 d'isolement ne soit ouvert (cf. figure 10). Dans cette position d'ouverture (0) du clapet 10 amont et de fermeture (F) du clapet 7 aval, la chambre située en amont du clapet 7 d'isolement peut être mise sous vide (pression basse déterminée) par exemple par un outil de remplissage pour réaliser des tests préalables au remplissage. Dans cette configuration il est en effet possible de mesurer d'éventuelles fuites provenant du clapet 7 d'isolation.

Dans une autre position d'étanchéité le clapet 7 d'isolement peut être également ouvert pour assurer un remplissage et/ou pour réaliser une éventuelle purge du circuit 6 et de la bouteille avant le remplissage (cf. par exemple la configuration de la figure 4 mais avec un flux de gaz inversé en cas de purge).

En fin de remplissage, le clapet d'isolement 7 peut être refermé et le clapet 10 pare-poussière peut être maintenu ouvert (cf. figure 10) pour réaliser d'éventuels tests d'étanchéité de fin de remplissage comme ceux décrits ci-dessus préalablement au remplissage.

Ces modes de remplissage permettent de garantir la sécurité du remplissage et la tenue de l'étanchéité du raccord après de multiples remplissages.

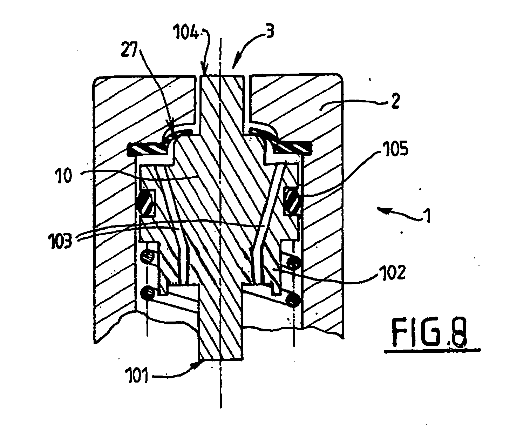

La variante de la figure 8 se distingue de celle de la figure 1 uniquement en ce que le corps 2 du raccord 1 comporte une lèvre 27 souple dont l'extrémité libre coopère avec le clapet 10 pare-poussière pour former une barrière d'étanchéité à l'eau entre le corps 2 du raccord et le clapet 10 pare-poussière (au moins lorsque ce dernier est en position amont de fermeture).

La lèvre 27 souple, qui a de préférence une forme annulaire autour du clapet 10 pare-poussière, est par exemple en élastomère rapporté ou vulcanisé sur le corps 2.

La souplesse de la lèvre 27 est prévue pour empêcher les intrusions d'eau vers l'aval tout en permettant tout de même des passages de fluide (gaz notamment) en cas de pression déterminée (notamment en cas de fuite du clapet 7 d'isolement).

L'utilisation de ce raccord sur des robinets de gaz de préférence munis de détendeurs de pression offre de nombreux avantages. En effet, les récipients (bouteilles par exemple) de gaz munis de tels robinets peuvent être remplis en toute sécurité et peuvent conserver un même raccord de remplissage sans pour autant mettre en péril l'étanchéité du raccord.

Le procédé de remplissage selon l'invention permet ainsi d'améliorer la protection de la garniture du clapet d'étanchéité de la pollution (particules métalliques, poussières...) via le filtre mobile déplacé lors du remplissage.

Ceci permet d'augmenter la fiabilité de l'étanchéité du raccord au cours de la durée de vie du robinet et de la bouteille qui en est équipé.

Selon l'invention, la poussée mécanique du clapet 7 d'isolation reste possible mais uniquement via le clapet 10 pare poussière.

Le procédé de remplissage selon l'invention permet ainsi d'améliorer la sécurité du remplissage via l'actionnement du mécanisme de double clapets en série décrit ci-dessus.

L'invention s'applique avantageusement aux raccords de remplissage et systèmes de remplissage pour bouteilles de gaz sous pression par exemple entre 150 et 750 bar) équipées de robinets avec des détendeurs intégrés ou à détendeurs amovibles.

Le raccord de remplissage peut le cas échéant également être le raccord de soutirage du gaz.

## Revendications

1. Raccord de remplissage pour récipient de gaz sous pression destiné à coopérer avec une prise de conditionnement pour permettre le remplissage dudit récipient, le raccord (1) comprenant un corps (2) définissant un circuit (6) interne de remplissage entre une extrémité amont (3) destinée à être reliée à une prise de conditionnement et une extrémité aval (4) destinée à être reliée à un récipient, le raccord comprenant un clapet (7) d'isolement mobile relativement à un siège (8) entre une position amont de fermeture du circuit et une position aval d'ouverture du circuit, ledit clapet (7) d'isolement étant sollicité vers sa position amont par un organe (9) de rappel, le raccord (1) comprenant en outre un clapet (10) pare-poussière disposé en amont du clapet (7) d'isolement, ledit clapet (10) pare-poussière comportant une extrémité (101) aval et étant mobile relativement au corps (2) entre une position amont de fermeture de l'extrémité amont (3) du circuit (6) et une position aval d'ouverture de l'extrémité amont (3) circuit, ledit clapet (10) pare-poussière étant sollicité vers sa position amont par un organe (14) de rappel, **caractérisé en ce que** le clapet (10) pare-poussière est déplaçable sélectivement vers l'aval soit :
- dans une première position aval déterminée dite « sans contact » ouvrant l'extrémité (3) amont du circuit (6), dans laquelle l'extrémité (101) aval du clapet (10) pare-poussière ne pousse pas l'extrémité amont (107) du clapet (7) d'isolement, l'extrémité amont (107) du clapet (7) d'isolement étant susceptible d'être poussée vers sa position aval d'ouverture du circuit (6) par du fluide sous pression entrant par l'extrémité amont (3) ouverte du circuit (6), soit dans
- une seconde position aval déterminée dite « de contact » ouvrant l'extrémité amont (3) du circuit (6), dans laquelle l'extrémité (101) aval du clapet (10) pare-poussière vient pousser une extrémité amont (107) du clapet (7) d'isolement mobile pour déplacer par contact le clapet (7) d'isolement vers sa position aval d'ouverture du circuit (6) et **en ce que** le clapet (10) pare-poussière comporte un ou des passages (103) pour guider au moins une partie du flux de fluide transitant d'amont (3) en aval (4) à travers le corps dudit clapet (10) pare-poussière.

2. Raccord selon la revendication 1, **caractérisé en ce que** le corps du clapet (10) pare-poussière coulisse dans le circuit (6) et **en ce que** le ou les passages (103) contraignent la totalité ou la quasi-totalité du flux de fluide transitant d'amont en aval dans le circuit à passer à travers le corps dudit clapet (10) pare-poussière, quelle que soit la position aval du clapet (10) pare-poussière.

3. Raccord selon la revendication 1 ou 2, **caractérisé en ce que** le ou les passages (103) comportent au moins une portion convergente pour guider au moins une partie du gaz transitant à travers le clapet (10) pare-poussière vers la partie centrale du circuit interne de remplissage.

4. Raccord selon l'une quelconque des revendications 1 à 3, **caractérisé en ce que** le ou les passages (103) convergent et guident au moins une partie du gaz transitant à travers le clapet (10) pare-poussière de façon parallèle dans la partie centrale du circuit interne de remplissage.

5. Raccord selon l'une quelconque des revendications 1 à 4, **caractérisé en ce que** le ou les passages (103) convergent pour guider au moins une partie du gaz transitant à travers le clapet (10) pare-poussière vers la partie centrale de l'extrémité amont (107) du clapet (7) d'isolement.

6. Raccord selon l'une quelconque des revendications 1 à 5, **caractérisé en ce que** le ou les passages (103) convergent pour guider au moins une partie du gaz transitant à travers le clapet (10) pare-poussière vers une zone convergente (15) du circuit interne de remplissage définissant le siège du clapet (7) d'isolement.

7. Raccord selon l'une quelconque des revendications 1 à 6, **caractérisé en ce que** le clapet (7) d'isolement est déplaçable sélectivement dans une position aval d'ouverture du circuit par actionnement mécanique réalisé par le clapet (10) pare-poussière.

8. Raccord selon l'une quelconque des revendications 1 à 7, **caractérisé en ce que** le clapet (7) d'isolement est déplaçable sélectivement dans une position aval d'ouverture du circuit par un flux de fluide sous pression.

9. Raccord selon l'une quelconque des revendications 1 à 8, **caractérisé en ce que** le clapet (10) pare-poussière est sélectivement déplaçable vers l'aval par un actionnement mécanique et/ou par du fluide sous pression.

10. Raccord selon l'une quelconque des revendications 1 à 9 **caractérisé en ce que** ledit raccord est également un raccord de soutirage de gaz.

11. Robinet pour fluide sous pression, en particulier pour gaz sous pression, avec ou sans détendeur de pression, comprenant un raccord de remplissage destiné à coopérer avec une prise de conditionnement pour permettre le remplissage dudit récipient via ledit raccord, **caractérisé en ce que** le raccord (1) de remplissage est conforme à l'une quelconque des revendications 1 à 10.

12. Récipient de fluide sous pression, en particulier bouteille de gaz sous pression, comprenant un robinet (12) conforme à la revendication11.

13. Procédé de remplissage d'un récipient de gaz sous pression conforme à la revendication 12 au moyen d'une prise (11) de conditionnement connectée mécaniquement audit raccord (1) de remplissage du récipient (13) de façon amovible, **caractérisé en ce qu'**il comporte une première étape de déplacement du clapet (10) pare-poussière vers l'aval pour ouvrir l'extrémité amont du circuit (6) via un actionnement mécanique et/ou un actionnement fluidique réalisé par la prise (11) de conditionnement et une seconde étape de déplacement du clapet (7) d'isolement vers une position aval d'ouverture via un actionnement mécanique réalisé par le clapet (10) pare-poussière et/ou via un actionnement fluidique réalisé par le gaz délivré par la prise de conditionnement, lors du remplissage au moins une partie du gaz transitant d'amont (3) en aval (4) est guidé dans le ou les passages (103) du clapet (10) pare-poussière, à travers le corps dudit clapet (10) pare-poussière.

14. Procédé selon la revendication13, **caractérisé en ce que** lors de la première étape le clapet (10) pare-poussière est déplacé dans sa première position aval déterminée dite « sans contact » et **en ce que** dans la seconde étape le clapet (7) d'isolement est déplacé vers une position aval d'ouverture via un actionnement fluidique réalisé par le gaz délivré par la prise de conditionnement.

15. Procédé selon la revendication 14, **caractérisé en ce que**, lors de la première étape, le clapet (10) pare-poussière est déplacé dans sa seconde position aval déterminée dite « de contact » et **en ce que** dans la seconde étape le clapet (7) d'isolement est déplacé vers une position aval d'ouverture via un actionnement mécanique réalisé par le clapet (10) pare-poussière.

16. Procédé selon l'une quelconque des revendications 12 à15, **caractérisé en ce que** le clapet (10) pare-poussière est déplacé vers l'aval par une action mécanique d'une extrémité d'un pousse-clapet (111) appartenant à la prise (11) de conditionnement.

## Patentansprüche

1. Füllstutzen für unter Druck stehenden Gasbehälter, der für das Zusammenwirken mit einem Konditionierungsanschluss zum Befüllen des Behälters bestimmt ist, wobei der Stutzen (1) einen Körper (2) umfasst, der einen inneren Füllkreislauf (6) zwischen einem stromaufwärtigen Ende (3), das für die Verbindung mit einem Konditionierungsanschluss bestimmt ist, und einem stromabwärtigen Ende (4), das für die Verbindung mit einem Behälter bestimmt ist, definiert, wobei der Stutzen ein Sperrventil (7) umfasst, das relativ zu einem Sitz (8) beweglich ist zwischen einer stromaufwärtigen Stellung zum Schließen des Kreislaufs und einer stromabwärtigen Stellung zum Öffnen des Kreislaufs, wobei das Sperrventil (7) in Richtung seiner stromaufwärtigen Stellung durch ein Rückstellorgan (9) beaufschlagt wird, wobei der Stutzen (1) ferner eine Staubschutzklappe (10) umfasst, die stromaufwärts des Sperrventils (7) angeordnet ist, wobei die Staubschutzklappe (10) ein stromabwärtiges Ende (101) aufweist und relativ zu dem Körper (2) beweglich ist zwischen einer stromaufwärtigen Stellung zum Schließen des stromaufwärtigen Endes (3) des Kreislaufs (6) und einer stromabwärtigen Stellung zum Öffnen des stromaufwärtigen Endes (3) des Kreislaufs, wobei die Staubschutzklappe (10) in Richtung ihrer stromaufwärtigen Stellung durch ein Rückstellorgan (14) beaufschlagt wird, **dadurch gekennzeichnet, dass** die Staubschutzklappe (10) selektiv in Richtung stromabwärts bewegbar ist entweder:
- in eine erste stromabwärtige, so genannte "kontaktlose" Stellung, die das stromaufwärtige Ende (3) des Kreislaufs (6) öffnet, in der das stromabwärtige Ende (101) der Staubschutzklappe (10) nicht das stromaufwärtige Ende (107) des Sperrventils (7) verschiebt, wobei das stromaufwärtige Ende (107) des Sperrventils (7) in seine stromabwärtige Stellung zum Öffnen des Kreislaufs (6) durch unter Druck stehendes Fluid, das durch das geöffnete stromaufwärtige Ende (3) des Kreislaufs (6) eintritt, verschoben werden kann, oder in
- eine zweite stromabwärtige, so genannte "kontaktbehaftete" Stellung, die das stromaufwärtige Ende (3) des Kreislaufs (6) öffnet, in der das stromabwärtige Ende (101) der Staubschutzklappe (10) ein stromaufwärtiges Ende (107) des beweglichen Sperrventils (7) verschiebt, um durch Kontakt das Sperrventil (7) in seine stromabwärtige Stellung zum Öffnen des Kreislaufs (6) zu verschieben, und dass die Staubschutzklappe (10) einen oder mehrere Durchlässe (103) aufweist, um mindestens einen Teil des Fluidflusses, der von stromaufwärts (3) nach stromabwärts (4) fließt, durch die Staubschutzklappe (10) hindurch zu führen.

2. Stutzen nach Anspruch 1, **dadurch gekennzeichnet, dass** der Körper der Staubschutzklappe (10) in dem Kreislauf (6) gleitet und dass der oder die Durchlässe (103) den gesamten oder nahezu den gesamten Fluidfluss, der von stromaufwärts nach stromabwärts in dem Kreislauf fließt, dazu zwingen, durch den Körper der Staubschutzklappe (10) hindurch zu fließen, unabhängig von der stromabwärtigen Stellung der Staubschutzklappe (10).

3. Stutzen nach Anspruch 1 oder 2, **dadurch gekennzeichnet, dass** der oder die Durchlässe (103) mindestens einen konvergierenden Abschnitt aufweisen, um mindestens einen Teil des Gases, das durch die Staubschutzklappe (10) hindurch fließt, in Richtung des inneren Füllkreislaufs zu führen.

4. Stutzen nach einem der Ansprüche 1 bis 3, **dadurch gekennzeichnet, dass** der oder die Durchlässe (103) konvergieren und mindestens einen Teil des Gases, das durch die Staubschutzklappe (10) hindurch fließt, parallel in den mittleren Teil des inneren Füllkreislaufs zu führen.

5. Stutzen nach einem der Ansprüche 1 bis 4, **dadurch gekennzeichnet, dass** der oder die Durchlässe (103) konvergieren, um mindestens einen Teil des Gases, das durch die Staubschutzklappe (10) hindurch fließt, in Richtung des mittleren Teils des stromaufwärtigen Endes (107) des Sperrventils (7) zu führen.

6. Stutzen nach einem der Ansprüche 1 bis 5, **dadurch gekennzeichnet, dass** der oder die Durchlässe (103) konvergieren, um mindestens einen Teil des Gases, das durch die Staubschutzklappe (10) hindurch fließt, in Richtung einer konvergierenden Zone (15) des inneren Füllkreislaufs, die den Sitz des Sperrventils (7) definiert, zu führen.

7. Stutzen nach einem der Ansprüche 1 bis 6, **dadurch gekennzeichnet, dass** das Sperrventil (7) selektiv in eine stromabwärtige Stellung zum Öffnen des Kreislaufs bewegbar ist durch mechanische Betätigung, die durch die Staubschutzklappe (10) realisiert wird.

8. Stutzen nach einem der Ansprüche 1 bis 7, **dadurch gekennzeichnet, dass** das Sperrventil (7) selektiv in eine stromabwärtige Stellung zum Öffnen des Kreislaufs durch einen unter Druck stehenden Fluidfluss bewegbar ist.

9. Stutzen nach einem der Ansprüche 1 bis 8, **dadurch gekennzeichnet, dass** die Staubschutzklappe (10) selektiv in Richtung stromabwärts bewegbar ist durch mechanische Betätigung und/oder durch unter Druck stehendes Fluid.

10. Stutzen nach einem der Ansprüche 1 bis 9, **dadurch gekennzeichnet, dass** der Stutzen auch ein Gasentnahmestutzen ist.

11. Ventil für unter Druck stehendes Fluid, insbesondere für unter Druck stehendes Gas, mit oder ohne Druckminderventil, umfassend einen Füllstutzen, der für das Zusammenwirken mit einem Konditionierungsanschluss zum Befüllen des Behälters über den Stutzen bestimmt ist, **dadurch gekennzeichnet, dass** der Füllstutzen (1) einem der Ansprüche 1 bis 10 entspricht.

12. Unter Druck stehender Fluidbehälter, insbesondere unter Druck stehende Gasflasche, umfassend ein Ventil (12) nach Anspruch 11.

13. Verfahren zum Befüllen eines unter Druck stehenden Gasbehälters nach Anspruch 12 mit Hilfe eines Konditionierungsanschlusses (11), der mit dem Stutzen (1) zum Befüllen des Behälters (13) auf lösbare Weise mechanisch verbunden ist, **dadurch gekennzeichnet, dass** es einen ersten Schritt des Bewegens der Staubschutzklappe (10) in Richtung stromabwärts zum Öffnen des stromaufwärtigen Endes des Kreislaufs (6) über eine mechanische Betätigung und/oder eine fluidische Betätigung, die durch den Konditionierungsanschluss (11) realisiert wird, aufweist und einen zweiten Schritt des Bewegens des Sperrventils (7) in Richtung einer stromabwärtigen Öffnungsstellung über eine mechanische Betätigung, die durch die Staubschutzklappe (10) realisiert wird, und/oder über eine fluidische Betätigung, die durch das durch den Konditionierungsanschluss bereitgestellte Gas realisiert wird, aufweist, wobei beim Befüllen mindestens ein Teil des Gases, der von stromaufwärts (3) nach stromabwärts (4) fließt, in den oder die Durchlässe (103) der Staubschutzklappe (10) geführt wird, durch den Körper der Staubschutzklappe (10) hindurch.

14. Verfahren nach Anspruch 13, **dadurch gekennzeichnet, dass** beim ersten Schritt die Staubschutzklappe (10) in ihre erste stromabwärtige, so genannte "kontaktlose" Stellung bewegt wird und dass beim zweiten Schritt das Sperrventil (7) in Richtung einer stromabwärtigen Öffnungsstellung bewegt wird über eine über eine fluidische Betätigung, die durch das durch den Konditionierungsanschluss bereitgestellte Gas realisiert wird.

15. Verfahren nach Anspruch 14, **dadurch gekennzeichnet, dass** beim ersten Schritt die Staubschutzklappe (10) in ihre zweite stromabwärtige, so genannte "kontaktbehaftete" Stellung bewegt wird und dass im zweiten Schritt das Sperrventil (7) in Richtung einer stromabwärtigen Öffnungsstellung bewegt wird über eine über eine mechanische Betätigung, die durch die Staubschutzklappe (10) realisiert wird.

16. Verfahren nach einem der Ansprüche 12 bis 15, **dadurch gekennzeichnet, dass** die Staubschutzklappe (10) in Richtung stromabwärts bewegt wird durch eine mechanische Einwirkung eines Endes eines Klappenantriebs (111), der dem Konditionierungsanschluss (11) zugehörig ist.

## Claims

1. Filling connector for a pressurised gas container, designed to cooperate with a conditioning connection so as to allow said container to be filled, the connector (1) comprising a body (2) which defines an internal filling circuit (6) between an upstream end (3) for connection to a conditioning connection and a downstream end (4) for connection to a container, the connector comprising an isolating valve (7) which is movable relative to a seat (8) between an upstream position for closing the circuit (6) and a downstream position for opening the circuit, said isolating valve (7) being urged towards its upstream position by a return member (9), the connector (1) further comprising a dust screen valve (10) arranged upstream of the isolating valve (7), said dust screen valve (10) having a downstream end (101) and being movable relative to the body (2) between an upstream position for closing the upstream end (3) of the circuit (6) and a downstream position for opening the upstream end (3) of the circuit, said dust screen valve (10) being urged towards its upstream position by a return member (14), **characterised in that** the dust screen valve (10) can selectively be moved downstream, into either:
- a first determined downstream position, known as the "contact-free" position, which opens the upstream end (3) of the circuit (6), in which position the downstream end (101) of the dust screen valve (10) does not push the upstream end (107) of the isolating valve (7), the upstream end (107) of the isolating valve (7) being capable of being pushed towards its downstream position for opening the circuit (6) by means of pressurised fluid entering via the open upstream end (3) of the circuit (6), or
- a second determined downstream position, known as the "contact" position, which opens the upstream end (3) of the circuit (6), in which position the downstream end (101) of the dust screen valve (10) pushes an upstream end (107) of the movable isolating valve (7) so as to move the isolating valve (7) by means of contact towards its downstream position for opening the circuit (6), and **in that** the dust screen valve (10) has one or more passages (103) for guiding at least some of the fluid flux in transit through the body of said dust screen valve (10) from upstream (3) to downstream (4).

2. Connector according to claim 1, **characterised in that** the body of the dust screen valve (10) slides within the circuit (6) and **in that** the one or more passages (103) force all or virtually all of the fluid flux in transit from upstream to downstream within the circuit to pass through the body of said dust screen valve (10), irrespective of the downstream position of the dust screen valve (10).

3. Connector according to either claim 1 or claim 2, **characterised in that** the one or more passages (103) have at least one convergent portion for guiding at least some of the gas in transit through the dust screen valve (10) towards the central portion of the internal filling circuit.

4. Connector according to any of claims 1 to 3, **characterised in that** the one or more passages (103) converge and guide at least some of the gas in transit through the dust screen valve (10) in a parallel manner in the central portion of the internal filling circuit.

5. Connector according to any of claims 1 to 4, **characterised in that** the one or more passages (103) converge to guide at least some of the gas in transit through the dust screen valve (10) towards the central portion of the upstream end (107) of the isolating valve (7).

6. Connector according to any of claims 1 to 5, **characterised in that** the one or more passages (103) converge to guide at least some of the gas in transit through the dust screen valve (10) towards a convergent region (15) of the internal filling circuit which defines the seat of the isolating valve (7).

7. Connector according to any of claims 1 to 6, **characterised in that** the isolating valve (7) is selectively movable into a downstream position for opening the circuit by means of a mechanical actuation carried out by the dust screen valve (10).

8. Connector according to any of claims 1 to 7, **characterised in that** the isolating valve (7) is selectively movable into a downstream position for opening the circuit by means of a pressurised fluid flux.

9. Connector according to any of claims 1 to 8, **characterised in that** the dust screen valve (10) is selectively movable downstream by means of mechanical actuation and/or pressurised fluid.

10. Connector according to any of claims 1 to 9, **characterised in that** said connector is also a gas extraction connector.

11. Tap for pressurised fluid, in particular for pressurised gas, with or without a pressure-reducing valve, comprising a filling connector designed to cooperate with a conditioning connection so as to allow said container to be filled via said connector, **characterised in that** the filling connector (1) is in accordance with any of claims 1 to 10.

12. Pressurised fluid container, in particular a pressurised gas bottle, comprising a tap (12) according to claim 11.

13. Method for filling a pressurised gas container according to claim 12 by means of a conditioning connection (11) which is mechanically connected in a detachable manner to said connector (1) for filling the container (13), **characterised in that** it involves a first step of moving the dust screen valve (10) downstream in order to open the upstream end of the circuit (6) by means of mechanical actuation and/or fluid actuation carried out by the conditioning connection (11), and a second step of moving the isolating valve (7) towards a downstream opening position by means of mechanical actuation carried out by the dust screen valve (10) and/or by means of fluid actuation carried out by the gas supplied by the conditioning connection, during filling at least some of the gas in transit from upstream (3) to downstream (4) being guided in the one or more passages (103) of the dust screen valve (10) through the body of said dust screen valve (10).

14. Method according to claim 13, **characterised in that**, during the first step, the dust screen valve (10) is moved into its first determined downstream position, known as the "contact-free" position, and **in that**, in the second step, the isolating valve (7) is moved towards a downstream opening position by means of a fluid actuation carried out by the gas supplied by the conditioning connection.

15. Method according to claim 14, **characterised in that**, during the first step, the dust screen valve (10) is moved into its second determined downstream position, known as the "contact" position, and **in that**, in the second step, the isolating valve (7) is moved into a downstream opening position by means of a mechanical actuation carried out by the dust screen valve (10).

16. Method according to any of claims 12 to 15, **characterised in that** the dust screen valve (10) is moved downstream by means of mechanical action of one end of a push valve (111) belonging to the conditioning connection (11).
